# EUROPEAN PATENT APPLICATION

(11) **EP 3 754 551 A1**
(43) Date of publication of application: **23.12.2020**
(21) Application number: 19202856.1
(22) Date of filing: 11.10.2019
(51) Int. Cl.: G06K 9/62

(54) **ITEM COMPARISON SYSTEM, DEVICE AND METHOD THEREFOR**

(30) Priority: 19.06.2019 GB 201908762
(71) Applicant: Kemp Little LLP, London, Greater London EC2V 6BJ (GB)
(72) Inventor: REEVE-YOUNG, Richard Andrew, London EC2V 6BJ (GB); GARLAND, Paul Adam, London EC2V 6BJ (GB); FRITH, Gerard Anthony, London EC2V 6BJ (GB); BARBER, Rachael Joanne, London EC2V 6BJ (GB)
(74) Representative: Bentall, Mark James

(57) **Abstract**

A system for training a machine learning model (106) is disclosed. The system comprises processing means configured to receive data defining one or more characteristics associated with a first item. The system receives a plurality of images of the first item wherein the plurality of images are associated with a plurality of different image sources. The system trains the machine learning model using the plurality of images and the one or more characteristics.

## Description

### FIELD OF THE INVENTION

This invention relates to item comparison methods and systems. Further, this invention relates to image processing methods and systems. It is particularly, but not exclusively, concerned with recognising specific protected features from one image in another image to determine whether the design of two items is sufficiently similar so that one item may be considered to infringe the rights of a right holder.

### BACKGROUND OF THE INVENTION

There are several existing solutions that assist in identifying the sale of counterfeit goods on the internet. Counterfeit goods are designed to look identical to their authentic counterparts; they feature the branding of the authentic goods, when present, and the descriptions of the product often match the descriptions used for the authentic goods. It is therefore possible to identify infringements by searching for specific tags, re-cycled authentic images or by checking whether the websites or marketplaces have been approved to sell those goods.

However, there are no current solutions that are able to identify instances of lookalike products. Lookalike products, also referred to as a "dupe" or a "copycat" product are items that are not counterfeit items but look similar enough in appearance to be considered a design infringement. A lookalike product makes no attempt to pass itself off as the original item. Rather, it is similar to the original item to a degree that is considered to infringe a design right in the original item.

Sometimes, a lookalike item is broadly similar to the entire original item; sometimes the lookalike item is only similar in one or several aspects to the original item. For example, the lookalike item may feature the same heel as a ladies shoe that is protected by a design right, but may be dissimilar in colour, shape or material of the upper. Further:
- Lookalikes do not use the same logo, branding or description so searching by conventional tags is of extremely limited use; and
- Lookalikes sometimes only copy aspects of a design and the final design is not identical to the authentic product so searching for identical images is also of limited use.
Unlike for counterfeit articles, where there are already automated solutions to identify counterfeit articles, lookalikes tend to be discovered on an ad-hoc basis. As a result of the present deficiencies, rights holders are often reliant on chance to discover that their rights are being infringed.

The absence of a targeted automated method for identifying lookalikes means that a large percentage of infringing conduct goes unidentified. This means:
- The exclusivity of the authentic design is undermined;
- The producer of the authentic design may suffer financially; and
- The producer of the authentic design not having knowledge of the issue and therefore being precluded from taking remedial action.

In summary there is no current system that is able to identify instances of lookalike products on various digital channels, or automatically assess the degree of similarity between the original design and the lookalike.

### SUMMARY OF THE INVENTION

Embodiments of the invention seek to address the above problems by providing a system for training a machine learning model, the system comprising a processing means configured to receive data defining one or more characteristics associated with a first item; receive a plurality of images of the first item wherein the plurality of images are associated with a plurality of different image sources; and train the machine learning model using the plurality of images and the one or more characteristics.

In one particularly advantageous application, embodiments of the invention determine the similarity between an image of an object and an image of a design right held by a design right owner.

Embodiments of the invention seek to address the above problems by further providing an image comparison system for determining the degree of similarity of images, the system comprising a trained machine learning model wherein the processing means is configured to receive a further image of an item; determine, using the machine learning model, a plurality of predetermined item characteristics associated with the further image or further item, and a probability associated with each item characteristic associated with the further item wherein each probability is indicative of the likelihood that the item has the characteristic or characteristics defining each item type; and determine a degree of similarity of the images or items image based on the probability associated with each item characteristic.

Further, embodiments of the invention are able to find potential lookalikes and assess their degree of similarity to the original design. This is achieved through combining search technology with a machine learning model.
- Given that lookalikes only copy features, embodiments of the invention comprise software such as photo recognition and comparison software which is configured to learn and identify the distinctive features that have been copied
- Embodiments of the invention comprise software configured to identify those distinctive features where the goods are portrayed differently between images - for example: different angles, different perspectives, different backgrounds, including human subjects wearing a product, or the product shot alone.

Thus, it will be appreciated that embodiments of the invention comprise software configured to monitor digital sources such as websites, marketplaces, and social for copycat items.

Embodiments of the invention provide value to designers by identifying goods which are not counterfeit but are similar enough to the original item to be of concern to the rights holder.

For the designer those concerns include lost revenue as consumers make mistakes in their purchases, brand dilution and erosion of exclusivity, and safety or health risks if the lookalike product is lower quality. Discovering a lookalike product may ultimately result in agreement that a design infringement has occurred, or a take-down of that lookalike product, or a settled agreement of some kind. At minimum, the discovery is important commercial intelligence for the designer.

Embodiments of the invention are able to monitor a large number of different digital properties in near real time. It can find identify lookalike products that an expert can miss. Further, it can deliver analytical intelligence on patterns of copycatting, growth in popularity of duped items, and provide intelligence on the next trends in lookalike products.

Preferred embodiments of the invention include a system for training a machine learning model, the system comprising a processing means configured to: receive data defining one or more characteristics associated with a first item, receive a plurality of images of the first item, and train the machine learning model using the plurality of images and one or more characteristics.

Preferred embodiments of the invention include a system for training a machine learning model, the system comprising a processing means configured to: receive data defining one or more characteristics associated with a first item, receive a plurality of images of the first item wherein the plurality of images are associated with a plurality of different image sources, and train the machine learning model using the plurality of images and one or more characteristics.

In some preferred embodiments of the invention, the plurality of different image sources may comprise any one or more of an image capture means communicatively coupled to the processing means and a database comprising one or more representations of the first item. One advantage of using images from an image capture means is that it enables the item to be imaged from different angles and under controlled lighting conditions. The advantage of using a database comprising one or more representations of the item is that the database may contain one or more representations from, for example, a registered design right of the item. This allows the system to train on particular protected characteristics of the item. Using a combination of these image sources increases the diversity of the training data for the machine learning model.

In some preferred embodiments of the invention, the data from the plurality of different image sources comprises image data comprising a number of pixels with associated intensity values and/or RGB (or equivalent) values. The image data may further comprise metadata associated with the image data.

In some embodiments of the invention, the data received by the processing means defines the characteristics as any one or more of shape, colour, configuration, text, a logo, texture, pattern, surface decoration, ornamentation, a spatial relationship between features of the item, or a combination of features of the item. The advantage of defining characteristics in such a way is that these may correspond to protected characteristics of a design right associated with the item.

In some preferred embodiments of the invention, the system further comprises an image processing module configured to perform a rotation of each image by a predetermined value to generate a transformed image or images, wherein the predetermined value is preferably approximately 15 degrees. The predetermined value is preferably selected based on the type of item. It will be appreciated by one of skill in the art that items may have a particular type, for example a shoe, a bottle, or other type of product. The rotation value may be selected to correspond to the angles of rotation commonly seen in images of items of a particular type. For example, a bottle is likely to be imaged resting on a flat surface, whereas a shoe is likely to imaged at greater degrees of rotation (for example if it is pictured being worn by a person). The advantage of transforming images in such a way is this may help prevent the machine learning model from only learning to recognise items at a specific orientation, when the rotated images are included in the training dataset. The inventors have appreciated that including rotated images in the training dataset of the machine learning model improves the performance of the system, enabling the trained model to recognise a larger number of potentially matched images.

In some embodiments of the invention, the system comprises an image processing module configured to perform an image transformation to reverse pixels associated with one or more images along a first axis to generate the or a transformed image or images. Image flip is used to help avoid text recognition. The inventors have found the sampling shows that image flip is domain-dependent. This technique is effective, for example, when a logo featuring text is present, but the text is different to the original. Thus, it will be appreciated that processing of the image or images to flip the image avoids training for text recognition. Similarly, rotation preserves text, just changes the orientation. Rotation is used to ensure the network is able to recognise rotated images if it later sees one. Where training data is sparse this is a method to expand the data set and help it avoid overfitting.

In some preferred embodiments, the system further comprises a rotatable platform for supporting the item and the or an image capture means is configured to capture the plurality of images of the item. I other embodiments, the system further comprises a drive means for rotating the platform by a predetermined value and capturing images of the item with the image capture means to generate the plurality of images of the article.

In some embodiments of the invention, the processing means may be configured to determine an image background and whether the image background is blank. In some embodiments the processing means is configured to apply a first predetermined image rotation when the image has a blank background and a second image rotation when the image has a non-uniform background wherein the size of the first image rotation is different from the size of the second image rotation. This is of particular advantage, as it is known that finer rotations may be performed on an item with a blank image background without producing image artefacts. When the image background is non-uniform, fine rotations (i.e. rotation size is not a multiple of 90), may produce image artefacts around the rotated item.

In some embodiments, the system may further comprise a search module configured to generate search strings by using a keyword analysis of web pages or source material. This may allow the system to improve the number of potentially matched/infringing articles, by augmenting the results returned by the search module.

Other preferred embodiments of the invention include an image comparison system for determining the degree of similarity of an image of an item and a further image of a further item, the system comprising a machine learning model trained using the system wherein the processing means is configured to: receive the further image of a further item, determine, using the machine learning model, one or more predetermined item characteristics associated with the further image or further item, and a probability associated with each item characteristic associated with the further item wherein each probability is indicative of the likelihood that the item has the characteristics or characteristics defining each item type, and determine a degree of similarity of the images or items image based on the probability associated with each item characteristic.

In some embodiments, the image comparison system if further configured to output the image of the item to a display and an associated probability of the degree of similarity between the image and the further image.

In some embodiments, the image comparison system may be further configured to determine the degree of similarity to a plurality of different images. The image comparison system may thereby be configured to determine the degree of similarity to a plurality of different products.

In some preferred embodiments, the image comparison system may further comprise a search interface to generate a search string generation set. The search string generation set comprises a plurality or set of keywords and or entities.

### BRIEF DESCRIPTION OF THE DRAWINGS

An embodiment of the invention will now be described, by way of example only, and with reference to the accompanying drawings, in which:
FIGURE 1 is a schematic diagram showing the main functional components according to an embodiment of the invention;
FIGURE 2 shows exemplary images which may be used as training data according to an embodiment of the invention;
FIGURE 3 shows further exemplary images which may be used as training data for a model according to an embodiment of the invention;
FIGURE 4 is a flow chart describing a method of training a model according to an embodiment of the invention;
FIGURE 5 is a flow chart describing a method of using a model according to an embodiment of the invention;
FIGURE 6 shows exemplary images, and the images with various transformations applied which may be used as training data for a model according to an embodiment of the invention;
FIGURE 7 shows further exemplary images which may be used as training data for a model according to an embodiment of the invention; and
FIGURE 8 shows exemplary images of items which are displayed using a display, together with the determined probability of similarity of 2 items.

### DETAILED DESCRIPTION

The following embodiments described may be implemented using a Python programming language using for example an OpenCV library. However, this is exemplary and other programming languages known to the skilled person may be used such as JAVA or C++.

Usually, the messaging or communication between different functional components is performed using the Flask framework written in Python. However, this is exemplary, and other programming languages or data formats may be used, such as REST/JSON API calls. These may be communicated over HTTPS using wired or wireless communications protocols which will be known to the skilled person.

Usually, the different functional components may communicate with each other, using wired or wireless communication protocols which will be known to the skilled person. The protocols may transmit service calls, and hence data or information between these components. Data within the calls is usually in the form of an alpha-numeric string which is communicated using wired or wireless communication protocols.

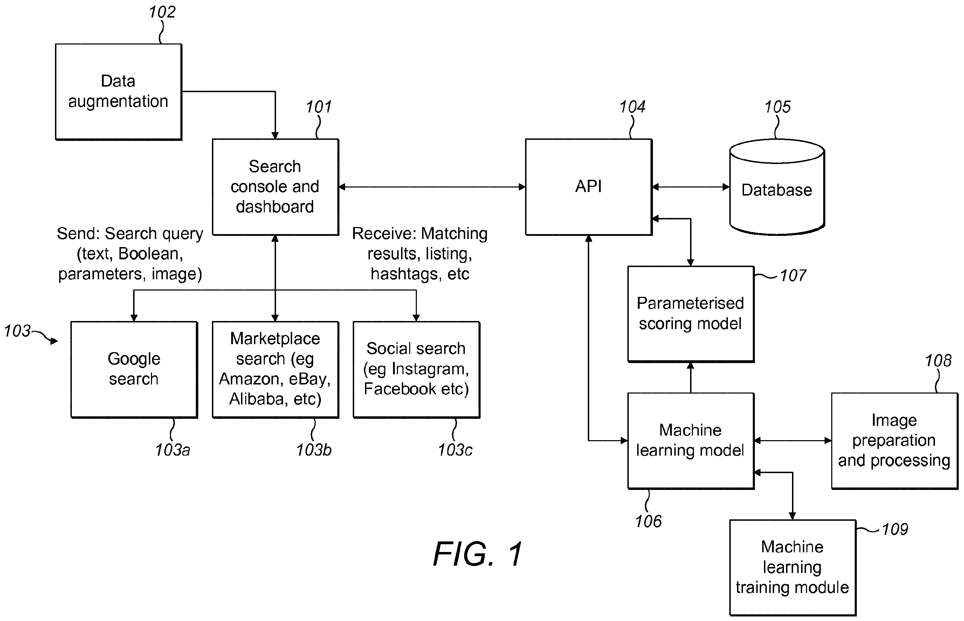

The system 1 may comprise any number of different models. Each of the models may run on a separate computer processor or server, although it will be appreciated that embodiments of the invention may in principle run on a single computer or server. Usually, a wired or wireless communications network is used. This may communicatively couple one or more of the functional components shown in figure 1 together to allow data exchange between the component(s). It may also be used to receive an image of an item captured by a camera or other recording means. Usually, the camera or recording means is positioned in close proximity to an item. It will be appreciated that the image comprises sample values or pixels.

In all cases, wired or wireless communications protocols may be used to exchange information between each of the functional components.

The computer or server comprises a neural network. Such neural networks are well known to the skilled person and comprise a plurality of interconnected nodes. This may be provided by a web-service cloud server. Usually, the nodes are arranged in a plurality of layers L1, L2, ...LN which form a backbone neural network.

Use of the term "lookalike" should be interpreted as an item that is identified by the system, or by an expert, as having one or more features in common with the target item. In particular, the common features are those that are the key characteristics of a target item such as the particular shape, colour, text, texture, pattern, configuration, mark, logo, surface decoration, ornamentation, relationship between features or the combination of features. Similarity is defined through features encoded in a layer of a deep learning network. Features such as colour may be defined by HSV or RGB values which will be known to the skilled person. Similarly, the spatial relationship between features may be defined by x, y, or z coordinates and so on. Shape may be defined by one or more two dimensional or three dimensional models defining the shape, such as a sphere, cylinder, cube, cuboid, tetrahedron, triangular prism, square pyramid, or a combination of the shapes or a model defining the coordinates and curvature of lines connecting features or shapes of the models. Examples of two dimensional models may be models defining a circle, square, triangle, rectangle and so on or a combination of the two dimensional models.

It will be appreciated that an item need not broadly resemble the target item in order to be a lookalike, as long as the common features are present. For example, when a design right is held for a design of bottle having a particular distinctive shape, colour, text and logo, a lookalike bottle is defined as a bottle having substantially one or more of a similar shape, colour, text and logo.

Figure 1 shows a schematic functional component diagram of the system 1 according to an embodiment of the present invention. The system 1 may comprise a search console 101, data augmentation module 102, digital interface 103, API 104, database 105, machine learning model 106, parameterised scoring model 107, image preparation and processing module 108 and machine learning training module 109. It will be appreciated that the system 1 according to present invention need not necessarily include every module shown in Figure 1.

The search console 101 provides a simple interface to enter a search string manually. The search string may then be sent to one or more selected digital channels via the digital interface 103 (e.g. Google Search, Amazon, etc).

Results from the one or more digital channels can be returned via the digital interface. These results can consist of various array data. For example, a web search result may consist of text, markups, images, and metadata. A social result may consist of text, hashtags, images and other data such as retweets. The results may be temporarily stored in a database 105 and then fed into a machine learning model 106 for evaluation. The database 105 may also store the evaluated results.

The machine learning model 106 may have been previously trained via a machine learning training module 109 to recognise protected design elements. An image preparation and processing module 108 is used to create training data for the machine learning model 106 that allows it to learn the features of the protected design element.

The machine learning module 106 may provide an evaluation of the raw similarity between an image being evaluated and a design being protected. This may provide one of the parameters for a scoring model 107. Other parameters may include metadata taken from search results delivered from the one or more digital channels. The final score for the evaluated image may be summed and used to assess the degree of match.

Thus, embodiments of the invention obtain a percentage score for each characteristic and sum the percentage for each characteristic. A score of scores is output which is representative of the degree of similarity between articles or images being compared.

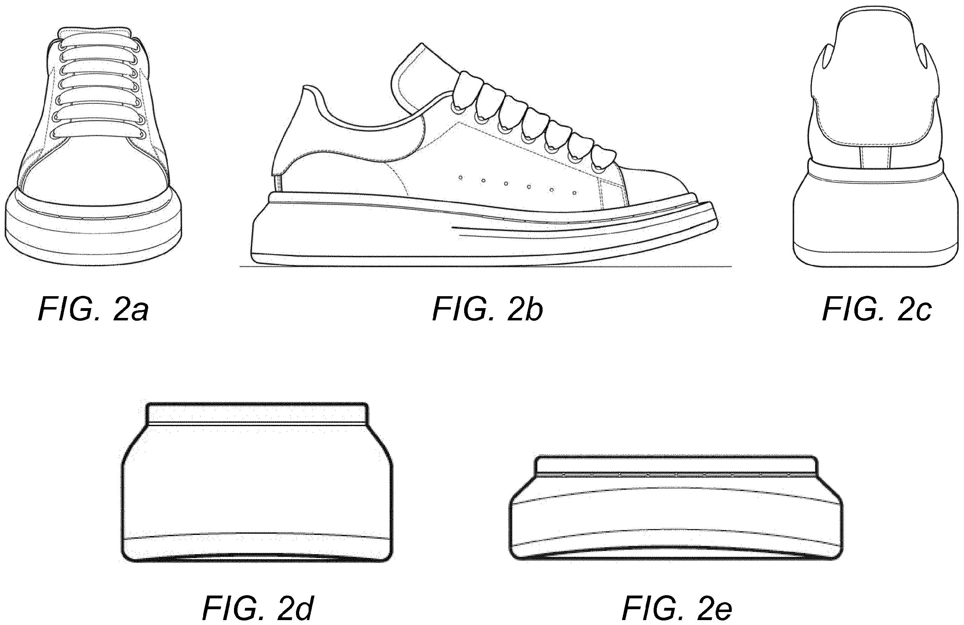

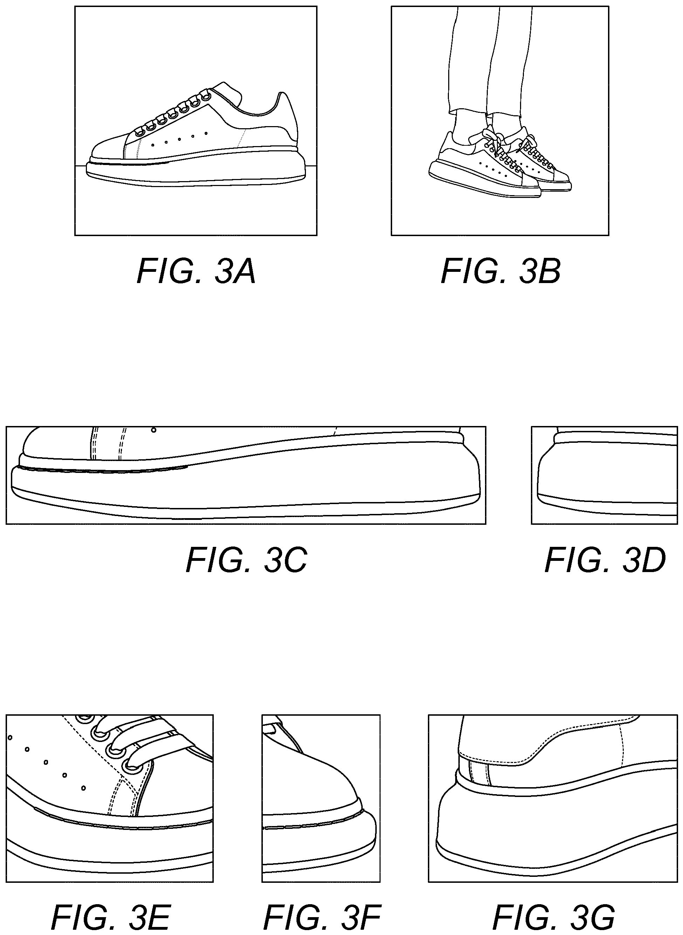

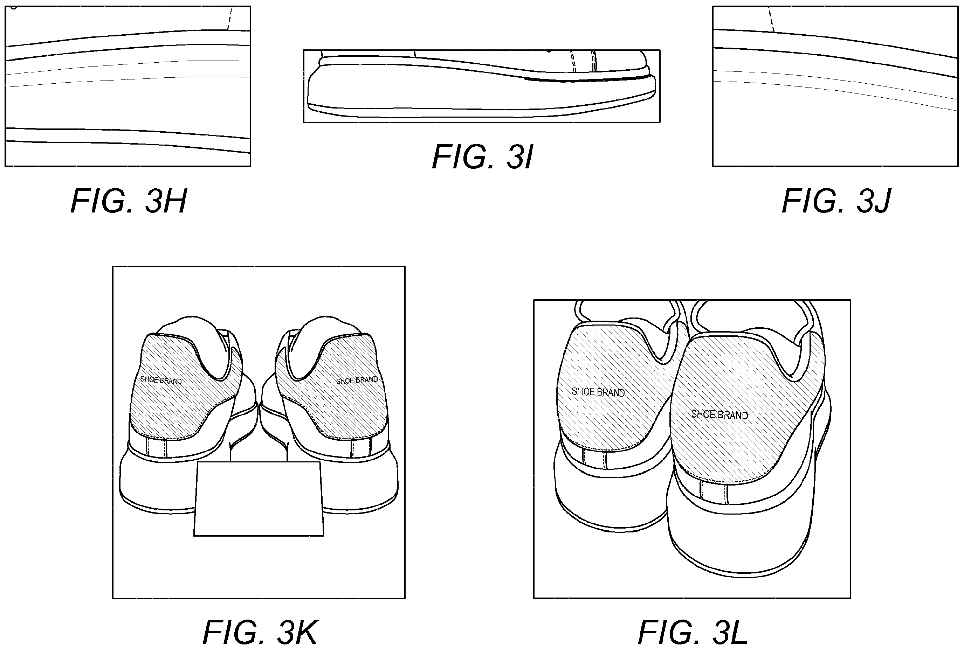

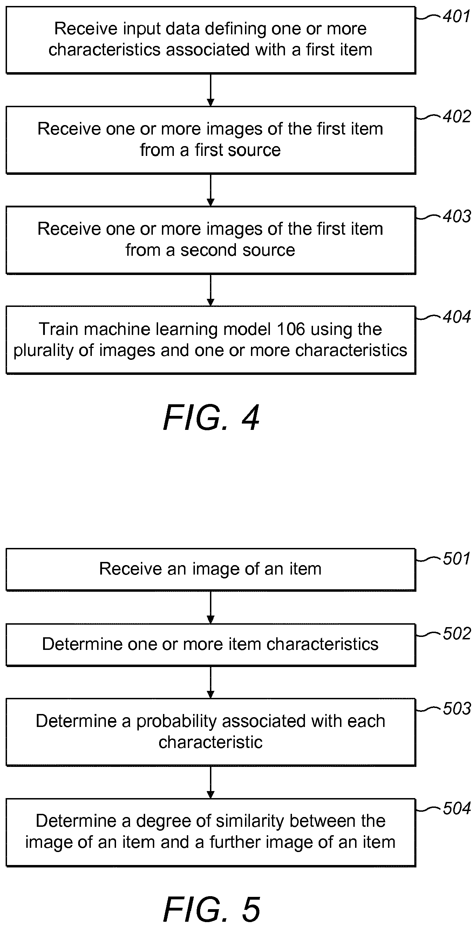

An embodiment of the invention will now be described, along with methods for using the system 1 according to the embodiment of the invention. The description refers to the functional component diagram of Figure 1, also referring to Figures 2 and 3 as well as the flow charts of Figures 4 and 5.

### Image preparation and processing module 108

The system 1 comprises an image preparation and processing module 108. The image preparation and processing module is configured to compile a training dataset that may be used to train the machine learning model 106. A particular aspect of the present invention is the identification of images where *some aspect* of the image is similar to a protected characteristic of the target item also referred to as an authentic design, but where the image as a whole may be relatively dissimilar to the target item. For example, the system according to the present invention may be configured to identify images where some aspect of the image infringes a protected design. In view of this, the image preparation and processing module 108 may be configured to compile a training dataset taking into account some domain and market knowledge of the user or of an expert. The image preparation and processing module 108 may be configured to compile a training dataset that includes one or more images focussed on key characteristics of the target item. For example, the training dataset may contain images of particular protected features of a design. In some cases, the training set can contain images taken from representations or views associated with a registered design.

Shown in Figure 2 are examples of images that may form part of the training dataset according to an embodiment of the invention. In this example, the target item is a protected design for the sole of a shoe. The different views shown are taken from the representations/views of the original design right filing. In this case, the training dataset contains images of the sole of the shoe from various angles, with variations of the specific design of the sole. By including these images in the training dataset, the machine learning model 106 may be trained to recognise the specific protected characteristics of the target item. For example, the model may be trained to recognise the specific design of a shoe sole, regardless of the properties of the rest of the shoe or the context of the shoe within the image.

Shown in Figure 3 are examples of further images that may form part of the training dataset. The particular images shown follow the same example as those of Figure 2, and relate to the target item being a protected design for the sole of a shoe. The images shown in Figure 3 show multiple perspectives of the shoe sole, along with multiple contexts. The multiple contexts may include zoomed in images of the sole alone, the sole included in various different designs of upper, the sole shown in various different lighting conditions, and the sole forming part of shoes being worn by a person. The presence of hashed lines visible in FIGS. 3K and 3L should be interpreted as representing a particular colour of the item.

The image preparation and processing module 108 may be configured to capture still images from video footage of the target item. In certain embodiments, the image preparation and processing module 108 may be configured to automatically extract close-up cropped views from still images taken from a video depicting a 360 degree rotation of the target item. For example, if the target item is a protected design for a shoe sole, a shoe comprising the protected sole may be placed on a turntable and a 360 degree video of the shoe rotating on the turntable may be shot. The image preparation and processing module 108 may be configured to extract still images from the video footage. In certain embodiments, the image preparation and processing module 108 may be configured to extract still images from video footage by subsampling the frames of the video footage, for example by extracting every third frame. Close up cropped images of the shoe sole may then be extracted from the still images by manual segmentation. In other embodiments, the image preparation and processing module 108 may be configured to automatically extract close-up cropped views of the shoe sole using automated segmentation techniques such as level sets, snakes, region growing, graph cuts, edge detection algorithms or other methods that are known to the skilled person. The image preparation and processing module may include the still images and/or the close-up cropped images in the training dataset.

The benefit of cropping is to provide focus on the key design features that are protected. This is because, the training data may be noisy in the sense that it may not contain just the protected feature, but may also contain other items such as wearer's feet, hands, background images, and so on. Accordingly, embodiments of the invention crop to ensure that the salient design feature is "weighted".

The image preparation and processing module 108 may be configured to apply various transformations to images of the training dataset. The transformations may include but are not limited to horizontal flipping, vertical flipping, rotations, addition of image noise, image zoom, contrast enhancement and random translation of the item in the image. The image preparation and processing module 108 may be configured to apply one or more transformations to one or more images within the training dataset, and incorporate the resulting one or more transformed images into the training dataset. The transformations applied to the one or more images of the training dataset may be implemented in Python using, for example, the *apply_transform()* function provided with the Keras image pre-processing library which may be found at: (https://keras.io/preprocessing/image/#apply transform).

The image preparation and processing module 108 may be configured to apply a horizontal flipping transformation to one or more images of the training dataset wherein the pixels of the image are reversed along a horizontal axis. In the resulting transformed image, the pixels situated at image coordinate (x,y) in the original image are located at new coordinate (width - x - 1, y). The horizontal flipping transformation maybe implemented using the *'flip_horizontal'* parameter of the *apply_transform()* function in the Keras image pre-processing library. The image preparation and processing module 108 may then include the resulting one or more transformed images in the training dataset.

The image preparation and processing module 108 may be configured to apply a vertical flipping transformation to one or more images of the training dataset wherein the pixels of the image are reversed along a vertical axis. In the resulting transformed image, the pixels situated at image coordinate (x,y) in the original image are located at new coordinate (x, height - y - 1). The horizontal flipping transformation maybe implemented using the *'flip_vertical'* parameter of the *apply_transform()* function in the Keras image pre-processing library. The image preparation and processing module 108 may then include the resulting one or more transformed images in the training dataset.

The inventors have appreciated that the application of image flipping transformations is of particular advantage. Including flipped images in the training dataset can help prevent the machine learning model 106 from focussing too much on specific text located on the target item.

Image flip is used to help avoid text recognition. The inventors have found the sampling shows that image flip is domain-dependent. This technique is effective, for example, when a logo featuring text is present, but the text is different to the original.

Thus, it will be appreciated that processing of the image or images to flip the image avoids training for text recognition. Similarly, rotation preserves text, just changes the orientation. Rotation is used to ensure the network is able to recognise rotated images if it later sees one. Where training data is sparse this is a method to expand the data set and help it avoid overfitting.

### The Keras image processing library contains the algorithm "Random Rotation Augmentation"

The image preparation and processing module 108 may be configured to apply a rotation transformation to one or more images of the training dataset wherein the image is rotated by a specified angle around a fixed origin point. The image preparation and processing module 108 may be configured to apply rotations of 90/180/270 degrees to one or more images of the training dataset where it is determined that the one or more images have a non-uniform background. The image preparation and processing module 108 may be configured to apply rotations of 45/135/225/315 degrees to one or more images of the training dataset where it is determined that the one or more images have a uniform or blank background. The image preparation and processing module 108 may then include the resulting one or more transformed images in the training dataset. The image processing module may be further configured to perform a rotation of each image by a predetermined value, wherein the predetermined value is preferably approximately 15 degrees. In some embodiments, the predetermined value is preferably selected based on the type of item. It will be appreciated by one of skill in the art that items may have a particular type, for example a shoe, a bottle, or other type of product. The rotation value may be selected to correspond to the angles of rotation commonly seen in images of items of a particular type. For example, a bottle is likely to be imaged resting on a flat surface, whereas a shoe is likely to imaged at greater degrees of rotation (for example if it is pictured being worn by a person).

Known algorithms for determining whether an image has a blank background will be known to the skilled person, such as a Python algorithm. Neighbouring or proximate pixels in images may be compared in terms of their similarities between HSV or RGB values to determine if the background is blank.

The inventors have found the sampling shows that probability of rotation is domain-dependent. Shoes, for example, are far more likely to be rotated than bottles, and where bottles are rotated, the degree of rotation will be less than 45 degrees. In the bottle example, inclusion of rotated images leads to a 4.3% increase in recall.

In the shoe example, inclusion of rotated images in one training set lead to a 4.9% increase in reacall, although it will be appreciated that this may be dependent on the number of rotations present in the images being analysed.

In light of this, the degree of rotation applied to images may be determined depending on the domain of the target item.

The image preparation and processing module 108 may be configured to apply a random translation to the location of a target item within one or more images of the training dataset where it is determined that the one or more images have a uniform background.

When it is determined that one or more images of the training dataset have a uniform background, the image preparation and processing module 108 may be further configured to apply one or more transformations to the target item within the one or more images of the training dataset, without necessarily applying the transformation to the image as a whole.

In certain embodiments, the image preparation and processing module 108 may be configured to automatically determine whether one or more images of the training dataset have a uniform background. The determination may be achieved using any appropriate image processing algorithm such as a difference-of-Gaussians approach or analysing the standard deviation of intensities in each colour channel where the one or more images are in RGB (or similar) format.

It will be appreciated that the exemplary images described above and shown in Figures 2 and 3 are merely examples of the types of images that may form part of the training dataset. The dataset may comprise any number of training images, and include any number of different views and contexts.

The system 1 may further comprise a rotatable platform to support the target item. The rotatable platform may be configured to support the target item within the field of view of a camera. In use the rotatable platform may be configured to rotate through 360 degrees, to allow a camera to capture images of the target item from multiple perspectives. The system 1 may further comprise a drive means for rotating the rotatable platform. The drive means may be coupled to the rotatable platform via one or more meshing gears. The drive means may be configured to rotate the rotatable platform by a predetermined value, for example by 360 degrees. The system 1 may capture one or more images and/or videos of the target item using a camera, wherein the images and/or videos represent the target item at different degrees of rotation relative to the camera. The captured images and/or videos may be used to generate images of the training dataset. The drive means may comprise a motor.

### Search Console 101

Search console 101 provides a simple web interface for a user to interact with the system 1 and provides the main navigation for the system 1. The search console 101 comprises a search interface 101a, which provides a simple interface to a user to manually enter a search string. The search string may comprise text, parameters (such as region, language, page age, etc.), Boolean parameters, and images. The string may be an alphanumeric string. The search string may be a registered or unregistered trade mark. The search interface 101a accepts as input various forms of search strings. The search console 101 provides an interface, by which a user may select from a list of available digital channels (103a, 103b, 103c for example). The search console 101 may be configured to convert the manually-entered search string into a format appropriate for each of the digital channels selected. The search console 101 may be further configured to remove parameters from the manually-entered search string that cannot be accepted by each of the digital channels selected. In some embodiments, the search console 101 may automatically select the digital channels to be searched without requiring input from the user. For example, a default selection of digital channels may be provided for each right holder. The search console may be configured to send the manually-entered search string to the one or more selected digital channels via the digital interface 103.

Examples of possible digital channels are Google Search (RTM), Bing (RTM), Amazon.com (RTM), eBay (RTM) or social media channels such as Instagram (RTM), Twitter (RTM), Facebook (RTM).

The results received from the various digital channels may be temporarily stored within a database 105, before being processed by the machine learning model 106. The database may also receive and store the results evaluated by the machine learning model 106.

In some embodiments, the search console comprises a search generator 101b. The search generator 101b may be configured to automatically generate search strings to be used by the search console 101. The search generator 101b may receive web pages with relevant descriptions and content relating to the product to be searched. The search generator 101b may be configured to perform keyword analysis on the received web pages. The search generator 101b may be further configured to perform entity extraction on the received web pages. For example, the search generator 101b may be configured to implement keyword analysis and entity extraction using the Watson Natural Language Understanding API from IBM (RTM). It will be appreciated that any keyword analysis or entity extraction techniques known to the skilled person could equally be used. The search generator 101b may be further configured to combine the extracted entities and keywords into a search string generation set that may be used to randomly-generate search strings. The search generator 101b may randomly sample keywords and/or entities from the search string generation set and combine them to create search strings. In some cases, the frequency of extracted keywords and entities within the search string generation set depends on the frequency of the extracted keywords and entities in the web page. It will be appreciated that the source material for extracting keywords and entities need not be limited to web pages but may include any relevant source material.

In certain embodiments, the search console 101 is configured to receive additional search data from data augmentation module 102. The data augmentation module 102 may be configured to extract data from confirmed "lookalike" images. The data extracted by the data augmentation module may comprise keywords, entities, images or parameters. The search console may be configured to receive the data extracted by the data augmentation module, and use said data to automatically generate further search strings. In certain embodiments, the further automatic generation of search strings based on data received from the data augmentation module may be performed by the search generator 101b of the search console 101.

The search console 101 further comprises a shortlist of matches 101c. The shortlist of matches may be based on results received from searches performed via the one or more selected digital channels. The received results may be analysed by the machine learning model 106 to determine the degree of similarity. The shortlist of matches 101c provides a presentation and interface to the user of items that have been identified as similar by the system 1. The search console 101 may be configured to filter and/or sort the identified items that are presented by the shortlist of matches 101c. In some embodiments, the user may specify, via the interface of the shortlist of matches 101c, the mechanisms by which the identified items should be sorted and/or filtered. The mechanisms may include but are not limited to % match, jurisdiction, age of page, age of source material, hashtags and websites. In certain embodiments, the search console 101 may automatically filter and/or sort the identified items based on one or more received criteria. For example, the search console may automatically filter results where the % match falls below a certain threshold. In some embodiments the user may specify, via the interface of the shortlist of matches 101c, items to be rejected or accepted. For example, the user may specify that an item should be rejected if it is associated with a jurisdiction that does not allow enforcement action, or a jurisdiction within which an enforcement action is already underway, or the match appears erroneous etc. In certain embodiments, the search console may be configured to automatically accept or reject identified items based on one or more received criteria. For example, the search console 101 may be configured to automatically reject one or more identified items that are associated with a jurisdiction that does not allow enforcement action.

In certain embodiments, the search console 101 comprises an enforcement tracking utility 101d. The enforcement tracking utility 101 d may be configured to receive data regarding the status of enforcement actions that are underway in various jurisdictions. The data may comprise one or more dates associated with enforcement actions and may comprise information related to the issuance of take-down letters.

In certain embodiments, the search console 101 comprises an analytics utility 101e. The analytics utility 101e may be configured to provide the user with insights relating to lookalike activity relating to the target item. Insights may include prevalence, activity by region, rate of change, platforms, statistical analyses etc.

### Machine Learning Model 106

The system 1 further comprises a machine learning model 106. In certain preferred embodiments, the machine learning model 106 may be a neural network classifier. The neural network classifier may be configured to take as input a single further image and provide as output an evaluation of the raw similarity between the further image and the target item. For example, the neural network may take as input a single further image and return a value representative of the percentage match between that further image and a protected product design. The neural network classifier may be a classifier in the sense that the raw evaluation is performed against one or more target classifications.

The number of classifications may be chosen by the user depending on the complexity of the target item. For example, the user may determine that a greater number of classifications are required for a protected design with a greater number of protected characteristics such as shape, colour, logo, text etc. For example, in the case of a protected shoe design, the machine learning model 106 may comprise classifiers for the sole, for the upper decoration and for the shape of any ornamentation. For a specific input further image, a number of different classifications may be matched. It will be appreciated that the user need not necessarily manually select the number of classifications and these may be determined automatically based on received data related to a design right or various meta-learning techniques such as landmarking.

In certain embodiments where the machine learning model 106 is a neural-network based model, the architecture of the neural network may be determined using a neural architecture search (NAS) approach. NAS is a meta-learning technique that employs an algorithm to search for the best neural network architecture for a given problem. The NAS algorithm defines a number of building blocks from which a successful neural network architecture may be assemble. The nature of the building blocks depends on the problem. For instance, for an image similarity problem the set of possible building blocks may comprise convolutional elements and max pooling elements. In certain embodiments, the specific assembly of network elements is determined by a recurrent neural network (RNN) controller, which combines the building blocks to create different architectures. The RNN controller typically seeks to optimise the predictive accuracy of the network architecture when the connection weights of the network have been trained on at least a selection of the images in the training dataset. In preferred embodiments, the architecture of the neural network is directly learned according to the methods of in Proxyless NAS: Direct Neural Architecture Search on Target Task and Hardware (Han Cai, Ligeng Zhu, Sonh Han, ICLR 2019, Feb 2019*).* This approach makes use of the entire training dataset and directly learns the architecture by constructing an "over-parameterised" network that contains a parallel combination of all possible building blocks. This over-parameterised network may then be pruned to produce the optimal architecture.

In preferred embodiments, the set of building blocks may predominantly comprise convolutional neural network (CNN) blocks with various properties. The NAS algorithm may therefore effectively search for the optimal filter size, stride and activation function configuration for the network. It will be appreciated that the set of building blocks may contain any suitable blocks and need not be limited to CNN blocks.

It will be appreciated that machine learning model 106 may be any appropriate machine learning model and need not be limited to a neural network classifier taking a single further image as an input. Such models include support vector machine, random forests, decision trees, gradient boosting machines, naive Bayes models etc. For example, machine learning model 106 may be a neural network taking at least two images as input and outputting a value representative of the degree of similarity between the at least two images. For example, the machine learning model 106 may be a neural network taking as input one or more images of a target item and one or more further images, and outputting values representative of the degree of similarity between each further image and the target item.

The machine learning model 106 may be trained by the machine learning training module 109. Machine learning model training will be well known to the skilled person, with various possible approaches. Thus, embodiments of the invention comprise a system which is able to learn. The machine learning training module may be configured to train the machine learning model 106 on data from a training dataset. The term "training" is known in the art, and refers to the process of adjusting the one or more parameters of a model in order to improve the model performance. A well-known algorithm for training neural network models is the backpropagation gradient descent algorithm.

### Exemplary Embodiment: Identifying Potentially Infringing Bottle Designs

A specific embodiment of the present invention will now be described with reference to the determination of potentially infringing designs of bottles with reference to Figures 4, 5, 6, 7 and 8 of the drawings. It will be appreciated that this is exemplary, and the methods and processes described may be applied to the determination of feature similarities between any images for any possible application.

In one embodiment, the problem to be addressed by the system 1 may be to identify bottles that infringe either one of two protected bottle designs. At step 401, the system 1 may receive input data defining one or more protected characteristics associated with the protected bottle designs.

The protected characteristics of the bottle designs may include the shape of the bottle and the shape and colour of a logo on the bottle. However, as previously described, the characteristics may comprise any one or more of:
- Shape - The shape of the item, or the shape of a particular feature of the item. For example, the shape of a shoe or the shape of the heel of a shoe.
- Colour - May be represented by particular RGB, HSV or other colour model parameters. It will be appreciated that a similar colour need not match the exact parameter values, but may fall within a range of parameter values representing similar colours.

- Text - A particular string of text associated with the item. May be represented by an alphanumeric string of characters and numbers.
- Texture - This may represent the surface texture of the item. I.e. whether the surface is rough, smooth etc. The texture may also represent the distribution of colours/shades across the surface of the item.
- Pattern - This may be a decorative pattern on the surface of the item, and may be a repeating surface pattern (RSP).
- Configuration - The manner in which the item is assembled, for example with two or more interconnected parts.
- Mark - A Registered Trade Mark or unregistered mark associated with the item.
- Logo - A brand logo or similar associated with the item, this may be a Registered Trade Mark.
- Surface decoration - This may include decoration applied to the surface of the item. For example, patterns, shapes.
- Ornamentation - This may refer to decorative elements applied to the surface of a product, and can be three-dimensional (as is the case with, for example, decorations carved in relief onto the surface of a wooden chair) or two-dimensional (as with decoration painted onto the surface of an ornament).
- A relationship between features - The manner in which two or more features are connected, or interact in some way.
- A combination of features - The manner in which two or more features are combined, in a particular way.

In this embodiment there may be two different protected bottle shape designs that may be infringed, but the shape and colour of the logo may be similar between the two protected bottle designs. In view of this, it may be determined that three classifications are sufficient for the machine learning model 106. The machine learning model 106 may then be configured to determine whether an image 1) infringes a first bottle design 2) infringes a second bottle design 3) does not infringe either design. The determination of the appropriate number of classifications may be made by the user. In certain embodiments, the determination of the appropriate number of classifications may be made by the machine learning model 106 using, for example, a meta-learning technique such as a landmarking algorithm.

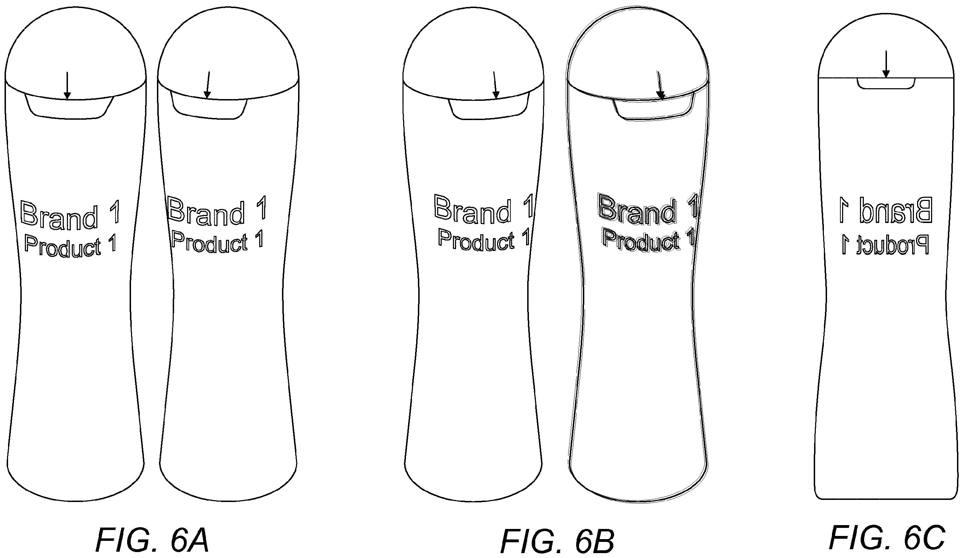

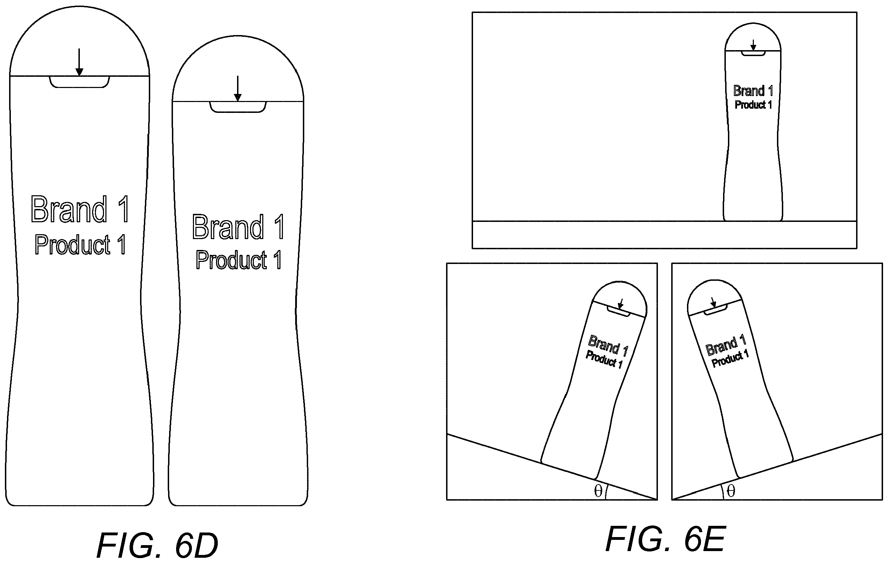

According to this embodiment, the machine learning model 106 comprises a neural network classifier model. Once the number of classifications has been determined, the architecture of the neural network may be determined using a neural architecture search (NAS) approach.
The image preparation and processing module 108 may then compile one or more images to form a training dataset for the neural network. The system 1 may be configured to extract one or more images of the protected bottle designs from one or more sources. At step 402, the system 1 may be configured to extract images of the protected bottle designs from a first source, for example the manufacturer website. Alternatively, the system 1 may receive one or more images of the protected bottle designs from the manufacturer website. Examples of one or more images taken from a first source, such as the manufacturer website, are shown in Figure 6. Alternatively, the system may receive one or more images taken from the original design right filings. The system may then send the one or more images to the image preparation and processing module 108.

At step 403, the system 1 may receive one or more images from a second source, for example still images captured of the protected design. The system 1 may be configured to capture one or more 360 degree videos of the protected bottle designs. Alternatively, system 1 may be configured to receive one or more 360 degree videos of the protected bottle designs. The system 1 may then send the captured 360 degree videos to the image preparation and processing module 108. The image preparation and processing module 108 may be configured to extract close-up cropped still images from the one or more 360 degree videos of the protected bottle designs. Examples of close up cropped still images extracted from a video such as a 360 degree video around an object are shown in Figure 6. It will be appreciated that the video may comprise images of an object taken from a plurality of different viewpoints of the object where the images are taken from a common plane or axis around which the object or camera is rotated. The image preparation and processing module 108 may automatically extract still images from the captured 360 degree video. The image preparation and processing module 108 may then automatically crop the still images to extract one or more close-up cropped images of the protected bottle design from multiple different perspectives.

The image preparation and processing module 108 may then apply one or more transformations to one or more of the received images from one or more sources, for example at least one of the first and second sources. The image preparation and processing module 108 may apply one or more rotation transformations to one or more of the received images. Shown in Figure 6 are examples of transformed images wherein rotational transformations of ±15 degrees have been applied. The image preparation and processing module 108 may apply one or more image flipping transformations to one or more of the received images. Shown in Figure 6 is an example of a transformed image wherein a horizontal flip has been applied. It has been appreciated by the inventors that applying one or more flipping transformations is particularly advantageous as it helps prevent the machine learning model 106 from focussing too much on specific text on the bottle. The image preparation and processing algorithm may apply additional image noise to one or more of the received images. The additional noise may be Gaussian noise. Figure 6 shows an example of a transformed image wherein Gaussian noise has been added. The processing performed by the image preparation and processing module 108 advantageously increases the size of the training data. Algorithms for adding Gaussian noise will be known to the skilled person and examples may be found at: https://qist.qithub.com/Prasad9/28f6a2df8e8d463c6ddd040f4f6a028a which describes an algorithm to add Gaussian noise to images using a Python algorithm. This is referred to as the add_gaussian_noise.py algorithm.

Specifically, using Gaussian noise improves recall but does reduce precision. Therefore, there is a trade of between improving recall and reducing precision. When images are not professionally produced by those selling lookalike products, the lower quality of the images can lead to them being missed by a classifier trained only with professional images. The inventors have found that recall is generally more important than precision in this application for completeness.

As shown in figure 1 of the drawings, the each of the modules are communicatively coupled other modules. This is indicated by the arrows. For example. Image preparation and processing module 108 provides training data to the machine learning module 106. That data is also communicated to the machine learning and training module 109 to allow the machine learning model to be trained.

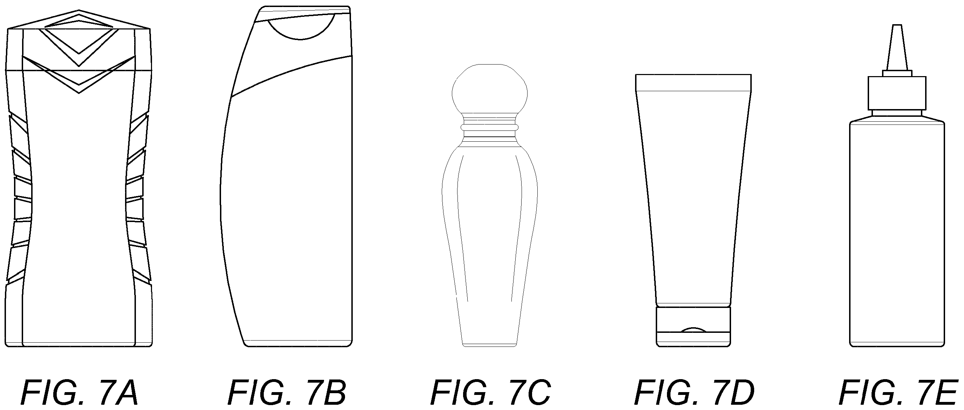

The system 1 may be configured to extract one or more images of related items that do not infringe the protected bottle design. For example, the system 1 may be configured to extract images of similar bottles to the protected design from internet search results. In certain embodiments, the system 1 may be configured to receive one or more images of related items that are not infringing designs. Figure 7 shows examples of images of similar bottles to the protected design. A manual review of the one or more images of related items may be performed to ensure that the images are not too similar to the protected bottle design.

The system 1 may then send the one or more images of related items to the image preparation and processing module 108, and incorporate them into the training dataset.

The machine learning training module 109 may then train the machine learning model 106 using the training dataset comprising images from multiple sources and the one or more characteristics of the protected bottle designs. The images of the training dataset may be labelled according to the determined classifications of the machine learning model 106. For example, the machine learning training module 109 may train the machine learning model 106 using 1000 images, with the 1000 images comprising a substantially uniform distribution of the three determined classifications.

The search console 101 may then be used to search for multiple images of potentially infringing bottle designs. The user may manually enter a search string into the search console 101. Alternatively, the user may provide one or more webpages to the search console 101, which may then perform keyword analysis and entity extraction via the search generator 101b to create a search string generation set to automatically create randomly-generated search strings. The search console 101 may then send one or more search strings to one or more digital channels, such as Google Search (RTM) and Instagram (RTM). The results received from the one or more digital channels may be temporarily stored in database 105, before being passed to the machine learning model 106.

The results received from the one or more digital channels comprise one or more images of potentially infringing products. The one or more images are passed as input to the trained machine learning model 106. The machine learning model 106 may then return one or more values indicative of the raw similarity between the image being evaluated and each protected design.

In certain embodiments, the output from the machine learning model 106 may be used as an input to a parameterised scoring model 107. The parameterised scoring model 107 may take further inputs in the form of metadata associated with the image being evaluated, taken from the search results received from the one or more digital channels. The parameterised scoring model may output a score for the evaluated image indicative of the degree of match between the evaluated image and the one or more protected designs.

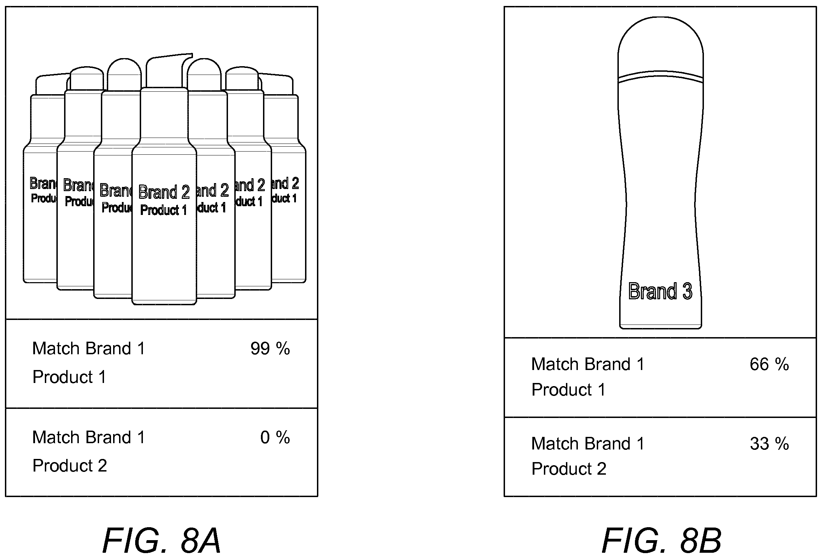

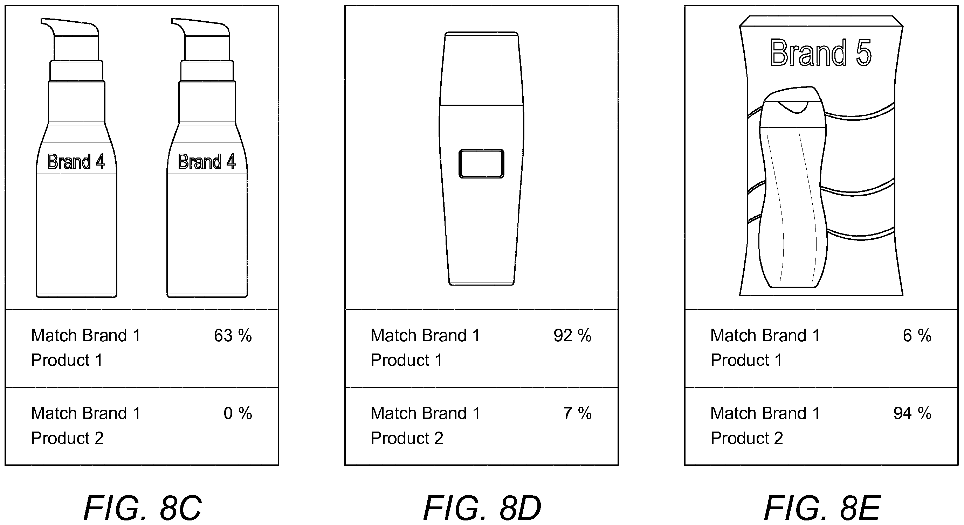

Shown in Figure 8 are examples of results that may be returned by the system 1 indicating the degree of match between an evaluated image and two protected designs. Figure 8A shows a result returned that indicates that an evaluated image has a 99% degree of match to one of the protected designs.

It will be seen that the image comparison system is able to determine the degree of similarly of a plurality of different products. This is achieved by having a number of output neurons equal to the number of classifications that the system is expected to perform. In this specific example, there are three output neurons corresponding to the three classifications of the two products shown in shown in figure 8A, namely Brand 1 product 1, Brand 1 product 2 and neither.

In certain embodiments, the user of system 1 may determine, based on the system returning a high degree of match between an evaluated image and a protected design, that the evaluated image contains an item that infringes the design right.

Thus it will be appreciated that the image comparison system for determining the degree of similarity of images, using a trained machine learning model 106, may perform the following steps described with reference to figure 5 of the drawings.

At step 501 a further image of a further item is received. This further image is an image of the potentially infringing or similar article or item. At step 502 the machine learning model determines one or a plurality of predetermined item characteristics associated with the further image or further item. At step 503 the machine learning model determines a probability associated with each item characteristic associated with the further item wherein each probability is indicative of the likelihood that the further item has the characteristic or characteristics defining each item type. At step 504 a degree of similarity of the images or items image is determined based on the probability associated with each item characteristic. Usually the degree of similarity is determined by summing the probability associated with each characteristic.

From the foregoing, it will be appreciated that the system and method may include a computing device, such as a desktop computer, a laptop computer, a tablet computer, a personal digital assistant, a mobile telephone, a smartphone. This may be advantageously used to capture still images or videos of items and may be communicatively coupled to a cloud web service hosting the algorithm.

The wired or wireless communication networks described above may be public, private, wired or wireless network. The communications network may include one or more of a local area network (LAN), a wide area network (WAN), the Internet, a mobile telephony communication system, or a satellite communication system. The communications network may comprise any suitable infrastructure, including copper cables, optical cables or fibres, routers, firewalls, switches, gateway computers and edge servers.

The system described above may comprise a Graphical User Interface. Embodiments of the invention may include an on-screen graphical user interface. The user interface may be provided, for example, in the form of a widget embedded in a web site, as an application for a device, or on a dedicated landing web page. Computer readable program instructions for implementing the graphical user interface may be downloaded to the client device from a computer readable storage medium via a network, for example, the Internet, a local area network (LAN), a wide area network (WAN) and/or a wireless network. The instructions may be stored in a computer readable storage medium within the client device.

As will be appreciated by one of skill in the art, the invention described herein may be embodied in whole or in part as a method, a data processing system, or a computer program product including computer readable instructions. Accordingly, the invention may take the form of an entirely hardware embodiment or an embodiment combining software, hardware and any other suitable approach or apparatus.

The computer readable program instructions may be stored on a non-transitory, tangible computer readable medium. The computer readable storage medium may include one or more of an electronic storage device, a magnetic storage device, an optical storage device, an electromagnetic storage device, a semiconductor storage device, a portable computer disk, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk.

Exemplary embodiments of the invention may be implemented as a circuit board which may include a CPU, a bus, RAM, flash memory, one or more ports for operation of connected I/O apparatus such as printers, display, keypads, sensors and cameras, ROM, a communications sub-system such as a modem, and communications media.

As will be appreciated by one of skill in the art, the term "processing means" may correspond to any suitable processing device. For example, the processing means may be any of a computer processor, graphics processor, programmable logic device, microprocessor, or any other suitable device. It will be appreciated that the processing means may comprise a plurality of processing devices, and may be a combination of different processing devices such as those described above.

Preferred embodiments of the present invention may include the features set out in the following clauses.
1. A system for training a machine learning model (106), the system comprising:
   a. processing means configured to:
      i. receive data defining one or more characteristics associated with a first item;
      ii. receive a plurality of images of the first item wherein the plurality of images are associated with a plurality of different image sources; and
      iii. training the machine learning model using the plurality of images and one or more characteristics.
2. The system of clause 1 wherein the plurality of different image sources comprise any one or more of an image capture means communicatively coupled to the processing means and a database comprising one or more representations of the first item.
3. The system of any preceding clause wherein the received data comprises a plurality of different characteristics associated with the first item and wherein the machine learning model is trained using the plurality of different characteristics.
4. The system of any preceding clause wherein the data defines the characteristics as any one or more of shape, colour, configuration, text, a logo, texture, pattern, surface decoration, ornamentation, a spatial relationship between features of the item, or a combination of features of the item.
5. The system of any preceding clause wherein the machine learning model is a neural network architecture search, NAS, algorithm.
6. The system of any preceding clause further comprising an image processing module (108) configured to crop each of the input images to generate a transformed image or images.
7. The system of any preceding clause wherein the or an image processing module (108) is further configured to perform a rotation of each image by a predetermined value to generate the or a transformed image or images.
8. The system of clause 4 wherein the predetermined value is approximately 15 degrees.
9. The system of any preceding clause wherein the or an image processing module is further configured to perform an image transformation to reverse pixels associated with each image along a first axis to generate the or a transformed image or images.
10. The system of any preceding clause wherein the or an image processing module (108) is further configured to perform a transformation to reverse pixels associated with each image along second axis to generate the or a transformed image or images.
11. The system of any one of clauses 1 to 4 wherein the or an image processing module (108) is further configured to perform a transformation to reverse pixels associated with each image along a first axis and wherein the or an image processing module (108) is further configured to perform a transformation to reverse pixels associated with each image along second axis wherein the first axis is substantially perpendicular to the second axis to generate the or a transformed image or images.
12. The system of any preceding clause wherein the or an image processing module (108) is further configured to apply Gaussian noise to each image to generate the or a transformed image or images.
13. The system of any one of clauses 6 to 12 wherein the machine learning model (106) is trained using the plurality of images and the transformed image or images.
14. The system of any preceding clause further comprising a rotatable platform for supporting the item and wherein the or an image capture means is configured to capture the plurality of images of the item.
15. The system of clause 7 further comprising a drive means for rotating the platform by a predetermined value and capturing images of the item with the image capture means to generate the plurality of images of the article.
16. The system of any preceding clause wherein the processing means is further configured to determine an image background and whether the image background is blank.
17. The system of clause 9 wherein the processing means is configured to apply a first predetermined image rotation when the image has a blank background and a second image rotation when the image has a non-uniform background wherein the size of the first image rotation is different from the size of the second image rotation.
18. The system of clause 9 wherein the processing means is configured to apply a random translation of the location of the article in the image when the processing means determines that the image background is blank.
19. The system of any preceding clause further comprising a search module (101) wherein the search module is configured to generate search strings by using a keyword analysis of web pages or source material.
20. An image comparison system for determining the degree of similarity of an image of an item and a further image of an item, the system comprising the machine learning model (106) of any preceding clause wherein the processing means is configured to:
   i. receive the further image of a further item;
   ii. determine, using the machine learning model (106), one or more predetermined item characteristics associated with the further image or further item, and a probability associated with each item characteristic associated with the further item wherein each probability is indicative of the likelihood that the item has the characteristic or characteristics defining each item type; and
   iii. determine a degree of similarity of the images or items image based on the probability associated with each item characteristic.
21. The image comparison system of clause 20 wherein the processing means is further comprising summing the probability associated with each item characteristic.
22. The image comparison system of clause 20 or 21 wherein the processing means is further configured to output the image of the item to a display and an associated probability of the degree of similarity between the image and the further image.
23. The image comparison system of clauses 11 to 12 further comprising determining the degree of similarly to a plurality of different products.
24. The image comparison system of any one of clauses 11 to 13 further comprising a search interface configured to input a search string comprising text, region, language, page age data.
25. The image comparison system of any one of clauses 11 to 13 further comprising a search interface to generate a search string generation set wherein the search string generation set comprises a plurality or set of keywords and or entities.
26. The image comparison system of clause 14 wherein the search interface is configured to randomly sample one or more of the keywords in the set and to generate a search based on the randomly sampled keywords.
27. A method for executing the system of any preceding clause.
28. A computer program product which when executed undertakes the method of clause 16.

## Claims

1. A system for training a machine learning model (106), the system comprising:
a. processing means configured to:
i. receive data defining one or more characteristics associated with a first item;
ii. receive a plurality of images of the first item wherein the plurality of images are associated with a plurality of different image sources; and
iii. train the machine learning model using the plurality of images and one or more characteristics.

2. The system of claim 1 wherein the plurality of different image sources comprise any one or more of an image capture means communicatively coupled to the processing means and a database comprising one or more representations of the first item.

3. The system of any preceding claim wherein the received data defines the characteristics as any one or more of shape, colour, configuration, text, a logo, texture, pattern, surface decoration, ornamentation, a spatial relationship between features of the item, or a combination of features of the item.

4. The system of any preceding claim further comprising an image processing module (108), wherein the image processing module (108) is further configured to perform a rotation of each image by a predetermined value to generate a transformed image or images, wherein the predetermined value is preferably selected based on the type of item.

5. The system of any preceding claim wherein the or an image processing module is further configured to perform an image transformation to reverse pixels associated with each image along a first axis to generate the or a transformed image or images.

6. The system of claims 4 or 5 wherein the machine learning model (106) is trained using the plurality of images and the transformed image or images.

7. The system of any preceding claim further comprising a rotatable platform for supporting the item and wherein the or an image capture means is configured to capture the plurality of images of the item.

8. The system of claim 7 further comprising a drive means for rotating the platform by a predetermined value and capturing images of the item with the image capture means to generate the plurality of images of the article.

9. The system of any preceding claim wherein the processing means is further configured to determine an image background and whether the image background is blank.

10. The system of claim 9 wherein the processing means is configured to apply a first predetermined image rotation when the image has a blank background and a second image rotation when the image has a non-uniform background wherein the size of the first image rotation is different from the size of the second image rotation.

11. An image comparison system for determining the degree of similarity of an image of an item and a further image of a further item, the system comprising a machine learning model (106) trained using the system of any preceding claim wherein the processing means is configured to:
i. receive the further image of a further item;
ii. determine, using the machine learning model (106), one or more predetermined item characteristics associated with the further image or further item, and a probability associated with each item characteristic associated with the further item wherein each probability is indicative of the likelihood that the item has the characteristic or characteristics defining each item type; and
iii. determine a degree of similarity of the images or items image based on the probability associated with each item characteristic.

12. The image comparison system of claims 12 wherein the processing means is further configured to output the image of the item to a display and an associated probability of the degree of similarity between the image and the further image.

13. The image comparison system of claims 12 or 13 further comprising determining the degree of similarly to a plurality of different products.

14. The image comparison system of any one of claims 12 to 14 further comprising a search interface to generate a search string generation set wherein the search string generation set comprises a plurality or set of keywords and or entities.

15. The system of any preceding claim further comprising a search module (101) wherein the search module is configured to generate search strings by using a keyword analysis of web pages or source material.

16. A method for executing the system of any preceding claim.

17. A computer program product which when executed undertakes the method of claim 16.
